# EUROPEAN PATENT APPLICATION

(11) **EP 2 479 732 A1**
(43) Date of publication of application: **25.07.2012**
(21) Application number: 12152156.1
(22) Date of filing: 23.01.2012
(51) Int. Cl.: G07F 15/00, G06Q 20/16, G06Q 20/32, B60L 11/18

(54) **Method and system for payment of charges associated with charging an electric vehicle**

(30) Priority: 24.01.2011 US 201113012086
(71) Applicant: General Electric Company, Schenectady, NY 12345 (US)
(72) Inventor: Boot, John Christopher, Atlanta GA 30339 (US)
(74) Representative: Illingworth-Law, William Illingworth

(57) **Abstract**

The use of micropayments to make the payment for electrical consumption used to charge an EV (102). In one aspect, a mobile device (106) such as a cellular telephone ("cell phone") is used to make the payments. In one aspect, a method of payment for charges associated with charging an electric vehicle (102) is described. This embodiment of a method comprises receiving electrical consumption information related to charging an electric vehicle (102) at a charging station (104). The electrical consumption information is associated with a mobile device number. The electrical consumption information is authenticated. The cost for the authenticated electrical consumption information is included on an invoice (114) for mobile device usage associated with the mobile device number.

## Description

### BACKGROUND OF THE INVENTION

EVs (electric vehicles, which include PEVs (plug-in electric vehicles) and PHEVs (plug-in hybrid electric vehicles) use batteries as a source of energy at least part of the time while in operation. These batteries discharge during use and are required to be recharged on an intermittent basis. In some instances, this charging occurs at charging stations away from the operator's home and away from any other location where an electric meter related to that party is found. Similar to gasoline stations, there is a cost associated with "re-fueling" the batteries at these charging stations. However, unlike with petroleum-based fuels, the costs associated with charging the batteries can be a few dollars or less, as compared to petroleum-based fuel costs of tens to hundreds of dollars for internal combustion engine powered vehicles. Furthermore, electric utilities sell electricity to consumers normally after a credit check or other guarantees of payment are made. Additionally, a meter-based customer who owes money to the utility are easily found as they are related to the address of the meter and can be encouraged to pay debts by cutting off or threatening to cut off electrical service. On the other hand, mobile purchasers of electricity such as EV owners or drivers have no credit check and perhaps no static address within the domain of the electric utility. While credit cards may be a solution, the equipment for taking credit card charges is expensive to supply and maintain (requiring a network backhaul capability). Further, credit card charges are usually fixed fee plus a percentage of cost for sales of electricity. The credit card overhead associated with the cost to recharge a battery could be more than the charge for electricity used.

Therefore, systems and methods are desired that overcome challenges in the art, some of which are described above. Specifically, systems and method of payment are desired that provide payment to the electricity provider for the mobile electricity users.

### BRIEF DESCRIPTION OF THE INVENTION

Described herein are embodiments of systems and methods that use micropayments to make the payment for electrical consumption used to charge an EV. In one aspect, a mobile device such as a cellular telephone ("cell phone") is used to make the payments.

In one aspect, a method of payment for charges associated with charging an electric vehicle is described. This embodiment of a method comprises receiving electrical consumption information related to charging an electric vehicle at a charging station. The electrical consumption information is associated with a mobile device number. The electrical consumption information is authenticated. The cost for the authenticated electrical consumption information is included on an invoice for mobile device usage associated with the mobile device number.

In another aspect, another method of payment for charges associated with charging an electric vehicle is described. This embodiment of a method comprises receiving electrical consumption information from a mobile device related to charging an electric vehicle at a charging station. The electrical consumption information is associated with a mobile device number associated with the mobile device. A message requesting authentication of a person associated with the mobile device as a payor for the electrical consumption information is transmitted to the mobile device. A response is received from the mobile device associated with the mobile device number confirming the person associated with the mobile device as the payor for the electrical consumption information related to charging the electric vehicle at the charging station. The cost for the authenticated electrical consumption information is included on a periodic invoice for mobile device usage associated with the mobile device number, and the periodic invoice is transmitted to a person associated with the mobile device number.

In yet another aspect, a system for payment for charges associated with charging an electric vehicle is described. This embodiment of a method comprises a memory and a processor operably connected with the memory. The processor is configured to receive electrical consumption information related to charging an electric vehicle at a charging station, associate the electrical consumption information with a mobile device number, authenticate the electrical consumption information, and include the cost for the authenticated electrical consumption information on an invoice for mobile device usage associated with the mobile device number.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is an overview illustration of one type of system that would benefit from embodiments of the present invention;
FIG. 2 is another overview illustration of one type of system that would benefit from embodiments of the present invention;
FIG. 3 is yet another overview illustration of one type of system that would benefit from embodiments of the present invention;
FIG. 4 illustrates one type of electronic device that would benefit from embodiments of the present invention;
FIG. 5 is a flowchart illustrating a method of practicing an embodiment of the present invention; and
FIG. 6 is a block diagram illustrating an exemplary operating environment for performing the disclosed methods.

### DETAILED DESCRIPTION OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint. Further, when examples of ranges are provided herein, it is to be appreciated that the given ranges also include all subranges therebetween, unless specifically stated otherwise.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means ``including but not limited to," and is not intended to exclude, for example, other additives, components, integers or steps. "Exemplary" means "an example of' and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

EVs (electric vehicles, which include PEVs (plug-in electric vehicles) and PHEVs (plug-in hybrid electric vehicles), require their batteries to be charged after use. In many instances, this charging occurs at charging stations away from the operator's home or other location where an electric meter related to that party is found. Similar to gasoline stations, there is a cost associated with "re-fueling" the batteries at these charging stations. However, unlike with petroleum based fuels, the costs associated with charging the batteries can be a few dollars or less as compared to fuel costs of tens to hundreds of dollars for internal combustion engine powered vehicles. Furthermore, electric utilities sell electricity to consumers normally after a credit check or other guarantees of payment are made. Additionally, a meter-based customer who owes money to the utility are easily found as they are related to the address of the meter and can be encouraged to pay debts by cutting off or threatening to cut off electrical service. On the other hand, mobile purchasers of electricity such as EV owners or drivers have no credit check and perhaps no static address within the domain of the electric utility. While credit cards may be a solution, the equipment for taking credit card charges is expensive to supply and maintain (requiring a network backhaul capability). Further, credit card charges are usually fixed fee plus a percentage of cost for sales of electricity. The credit card overhead associated with the cost to recharge a battery could be more than the charge for electricity used.

Therefore, systems and methods of payment are desired that provide payment to the electricity provider for the mobile electricity users. Described herein are embodiments of systems and methods that use micropayments to make the payment. In one aspect, a mobile device such as a cellular telephone ("cell phone") is used to make the payments.

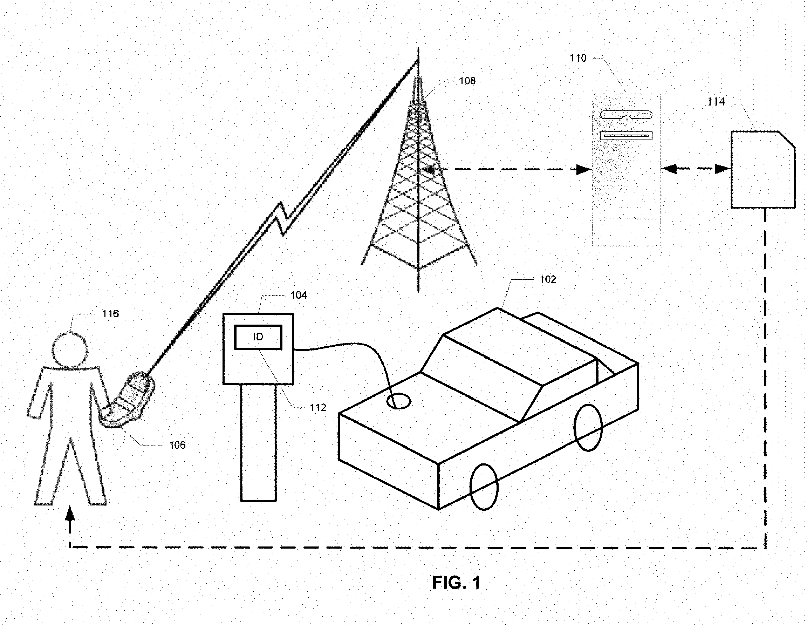

FIG. 1 is an overview illustration of one type of system that would benefit from embodiments of the present invention. As shown in FIG. 1, an EV 102 receives an electrical charge from an electric vehicle charging station 104, also referred to herein as a charging station. Analogous to a gasoline pump, a charging station 104 re-charges the batteries of an EV 102. Although most EVs 102 can be recharged from a domestic wall socket, many support faster charging at higher voltages and currents that require dedicated equipment with a specialized connector. SAE International defines 240 Volt AC charging as level 2 charging, and 500 Volt DC high-current charging as level 3 charging. Owners can install a level 2 charging station at home, while businesses and local government provide level 2 and level 3 public charging stations that supply electricity for a fee. An example of a commercial charging station is the WattStation™ as available form General Electric Company, Schenectady, NY.

As the EV 102 is charged, the charging station 104 records electrical consumption information. For example, the charging station 104 can record the number of kilowatt-hours (KWH) used to recharge the batteries. In one aspect, the electrical consumption information can be displayed by the charging station 104. In one aspect, the electrical consumption information can be transmitted from a mobile device 106 through a wireless telecommunications system 108 to a server 110. In one aspect, the communications to the server includes an identifier 112 for the charging station 104. In one aspect, the identifier can be a number or letters assigned to the charging station 104. In one aspect, the identifier can be alphanumeric characters assigned to the charging stations 104, though other identifiers are contemplated ithin the scope of embodiments of this invention such as pictures, bar codes, RFID transmissions, near-field (e.g., BlueTooth) transmissions, and the like. In one aspect, the communication to the server 110 is via a text message from the mobile device 106 such as, for example, an SMS text or an MMS text. In one aspect, the text uses a short code, as known to one of ordinary skill in the art. In one apsect, the communication to the server 110 is via an email message from the mobile device 106. In one apsect, the communication to the server 110 is via a telephone call from the mobile device 106. In one apsect, the communication to the server 110 is via an Internet link from the mobile device 106.

The server 110 associates the electrical consumption information with a mobile device number. In one aspect, this comprises associating the electrical consumption information with the mobile device number of the mobile device 106 that sent the text message or email message. In one aspect, this can be performed by extracting the mobile device number from the email or text message and associating it with the electrical consumption information. In another aspect, the mobile device number can comprise a part of the message of the text or email. In another aspect, a text can be sent to a short code, which can be used to correlate the mobile device number and the consumption information. For example, a consumer can send a text to a short code such as for example "123456" that has a message content of for example "CS1234" (the charging station 104 identifier) and $1.73 (an example of the electrical consumption information). Alternatively, the electrical consumption information can be sent in KWH (e.g., 0.75), or in the amount of time the EV is connected to the charging station or is desired to be connected to the charging station (e.g.., 30 minutes). Similarly, an email can be sent to a specific email address with similar information, though the mobile device number may be included in the message or the mobile device number can be determined from the sender's email address. Likewise, the electrical consumption information can be transferred to the server 110 over an automated telephone system such as an IVR system or a DTMF system. In one aspect, a user can use a smart mobile device to access a web page to enter electrical consumption and mobile device number information or information that can be used to retrieve a mobile device number. Though numerous means can be used to perform the step, the electrical consumption information is associated with the mobile device number or another number that can be used for billing purposes.

Once the electrical consumption information is received by the server 110 and associated with a mobile device number or other number that can be used for billing purposes, the electrical consumption information can be authenticated. Authentication helps prevent fraudulent charges for electrical consumption and also helps prevent accidental charges. In one aspect, the server 110 sends a text message or email message to the mobile device 106 requesting verification of the electrical consumption information. In one aspect, the server 110 sends a text message or email message to a person associated with the mobile device 106 as a payor for the electrical consumption information associated with charging the EV 102. The person 116 can respond using the mobile device 106 by text, email, voice call, web page, or the like to confirm or deny the electrical consumption information. In one aspect, the person 116 can include a PIN assigned to the user or any other unique identifier in the response in order to authenticate the transaction. If confirmed, then the charge (cost) for the electrical consumption can be assimilated onto a periodic invoice 114. In one aspect, the periodic invoice 114 is an invoice for mobile device usage associated with the mobile device number. In one aspect, the periodic invoice is an aggregation of electrical consumption charges accrued over a period of time such as for example a month. The invoice 114 is then transmitted to the person 116 associated with the mobile device 106. In one aspect, the invoice 114 is transmitted electronically. In one aspect, the invoice 114 is transmitted by mail.

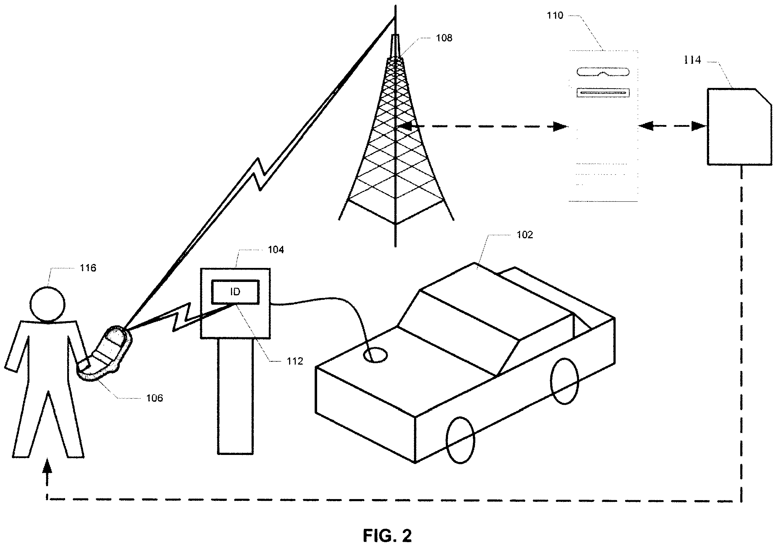

FIG. 2 is another overview illustration of one type of system that would benefit from embodiments of the present invention. In FIG. 2, the electric consumption information is wirelessly transferred from the charging station 104 to the mobile device 106. This can be done by near-field communications technology such as for example, RFID (passive or active), BlueTooth, infrared, and the like. In this instance, the charging station 104 comprises a transmitter mechanism configured to transmit at least the consumption information to the mobile device 106. Similarly, the mobile device 106 comprises a receiver mechanism to receive at least the consumption information as transmitted by the charging station 104. Furthermore, the charging station 104 can transmit its identifier 112 to the mobile device 106 along with the electrical consumption information.

Once received, the electrical consumption information is transmitted to the server 110 via the wireless telecommunications system 108 as described above. Similalrly, the identifier 112 can be transmitted to the server 110 via the wireless telecommunications system 108 as described above. Once received by the server 110, the electrical consumption information can be associated with the mobile device number, authenticated, and the cost for the authenticated electrical consumption information included on a periodic invoice 114 as described above.

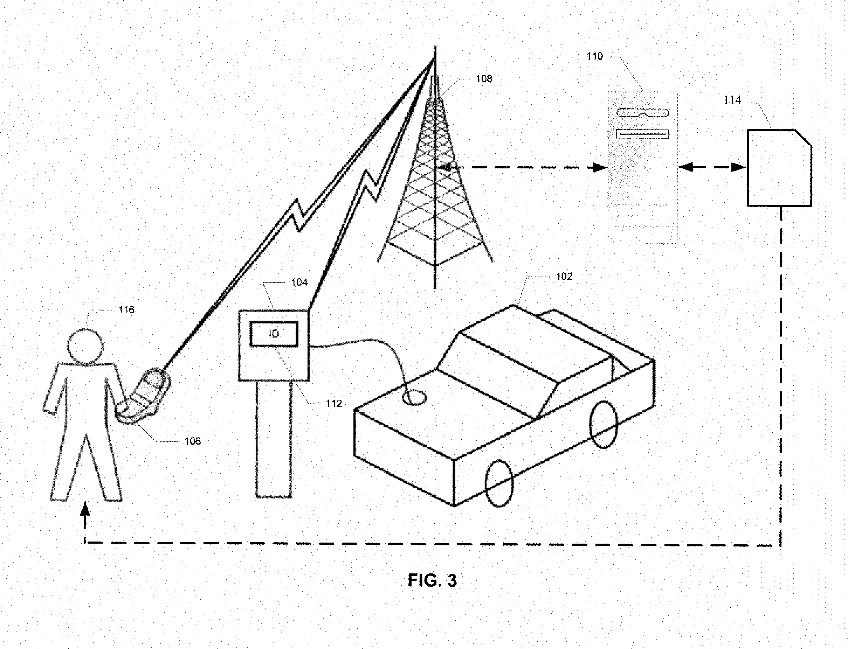

FIG. 3 is yet another overview illustration of one type of system that would benefit from embodiments of the present invention. In FIG. 3, the charging station 104 communicates with the server 110 separate from the mobile device 106. Though FIG. 3 shows the communication between the charging station and the server 110 as wireless using the wireless telecommunications network 108, it is to be appreciated that this communication can be wired, wireless or a combination thereof and can use any number of networks, including the Internet, and can be direct between the server 110 and the charging station 104. In one aspect, the mobile device 106 transmits the charging station identifier 112 to the server 110. Electrical consumption for the charging station 104 is then associated with the mobile device number. In this instance, the electrical consumption information can be transmitted to the server 110 by the charging station 104. In one instance, the user can enter the mobile device number into the charging device 104 using for example a keypad or touch display, and the charging station 104 transmits the mobile device number to the server 110. The electrical consumption information is authenticated, and the cost for the authenticated electrical consumption information included on a periodic invoice 114 as described above.

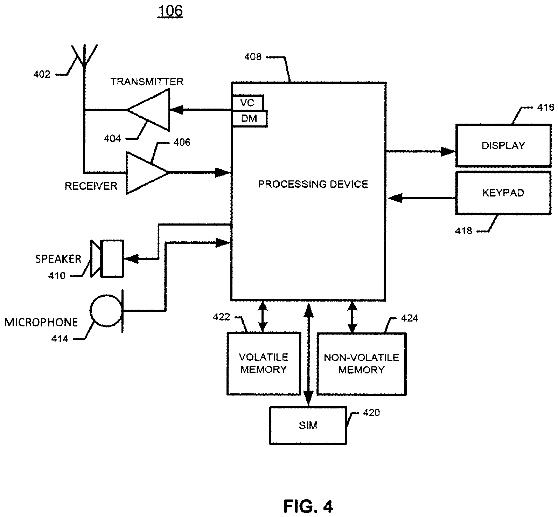

Reference is now made to FIG. 4, which illustrates one type of electronic device that would benefit from embodiments of the present invention. As shown, the electronic device may be a mobile device 106, and, in particular, a cellular telephone. It should be understood, however, that the mobile device illustrated and hereinafter described is merely illustrative of one type of electronic device that would benefit from the present invention and, therefore, should not be taken to limit the scope of the present invention. While several embodiments of the mobile device 106 are illustrated and will be hereinafter described for purposes of example, other types of mobile devices, such as personal digital assistants (PDAs), pagers, laptop computers, as well as other types of electronic systems including both mobile, wireless devices and fixed, wireline devices, can readily employ embodiments of the present invention.

The mobile device 106 includes various means for performing one or more functions in accordance with embodiments of the present invention, including those more particularly shown and described herein. It should be understood, however, that the mobile device may include alternative means for performing one or more like functions, without departing from the spirit and scope of the present invention. More particularly, for example, as shown in FIG. 4, in addition to an antenna 402, the mobile device 106 includes a transmitter 404, a receiver 406, and an apparatus that includes means, such as a processor 408, controller or the like, that provides signals to and receives signals from the transmitter 404 and receiver 406, respectively, and that performs the various other functions described below including, for example, the functions relating to transmitting electrical consumption information to the server 110 and, in some embodiments, receiving electrical consumption information and/or charging station identifier 112 information from the charging station and authenticating charges for electrical consumption. In one embodiment, the processor 408 may be configure to transmit electrical consumption information related to charging an electric vehicle 102 at a charging station 104, and authenticate the electrical consumption information such that the authenticated electrical consumption information can be included on an invoice for the mobile device's usage.

As one of ordinary skill in the art would recognize, the signals provided to and received from the transmitter 404 and receiver 406, respectively, may include signaling information in accordance with the air interface standard of the applicable cellular system and also user speech and/or user generated data. In this regard, the mobile device can be capable of operating with one or more air interface standards, communication protocols, modulation types, and access types. More particularly, the mobile device 106 can be capable of operating in accordance with any of a number of second-generation (2G), 2.5G, third-generation (3G) and/or fourth generation (4G) communication protocols or the like. Further, for example, the mobile device 106 can be capable of operating in accordance with any of a number of different wireless networking techniques, including Bluetooth, IEEE 802.11 WLAN (or Wi-Fi®), IEEE 802.15.3, IEEE 802.15.4, IEEE 802.16 WiMAX, ultra wideband (UWB), and the like.

It is understood that the processor 408, controller or other computing device, may include the circuitry required for implementing the video, audio, and logic functions of the mobile device and may be capable of executing application programs for implementing the functionality discussed herein. For example, the processor may be comprised of various means including a digital signal processor device, a microprocessor device, and various analog to digital converters, digital to analog converters, and other support circuits. The control and signal processing functions of the mobile device are allocated between these devices according to their respective capabilities. The processor 408 thus also includes the functionality to convolutionally encode and interleave message and data prior to modulation and transmission. The processor can additionally include an internal voice coder (VC), and may include an internal data modem (DM). Further, the processor 408 may include the functionality to operate one or more software applications, which may be stored in memory. For example, the controller may be capable of operating a connectivity program, such as a conventional Web browser. The connectivity program may then allow the mobile device to transmit and receive Web content, such as according to HTTP, Web-Services, and/or the Wireless Application Protocol (WAP), for example.

The mobile device 106 may also comprise means such as a user interface including, for example, a conventional earphone or speaker 410, a ringer 412, a microphone 414, a display 416, all of which are coupled to the processor 408. The user input interface, which allows the mobile device to receive data, can comprise any of a number of devices allowing the mobile device to receive data, such as a keypad 418, a touch display (not shown), a microphone 414, or other input device. In embodiments including a keypad, the keypad can include the conventional numeric (0-9) and related keys (#, *), and other keys used for operating the mobile device and may include a full set of alphanumeric keys or set of keys that may be activated to provide a full set of alphanumeric keys. Although not shown, the mobile device 106 may include a battery, such as a vibrating battery pack, for powering the various circuits that are required to operate the mobile device 106, as well as optionally providing mechanical vibration as a detectable output.

The mobile device 106 can also include means, such as memory including, for example, a subscriber identity module (SIM) 420, a removable user identity module (R-UIM) (not shown), or the like, which may store information elements related to a mobile subscriber. In addition to the SIM 420, the mobile device 106 can include other memory. In this regard, the mobile device 106 can include volatile memory 422, as well as other non-volatile memory 424, which can be embedded and/or may be removable. For example, the other non-volatile memory may be embedded or removable multimedia memory cards (MMCs), secure digital (SD) memory cards, Memory Sticks, EEPROM, flash memory, hard disk, or the like. The memory can store any of a number of pieces or amount of information and data used by the mobile device to implement the functions of the mobile device. For example, the memory can store an identifier, such as an international mobile equipment identification (IMEI) code, international mobile subscriber identification (IMSI) code, mobile device integrated services digital network (MSISDN) code, or the like, capable of uniquely identifying the mobile device 106. The memory can also store content. The memory may, for example, store computer program code for an application and other computer programs. For example, in one embodiment of the present invention, the memory may store computer program code for a method of payment for charges associated with charging an electric vehicle.

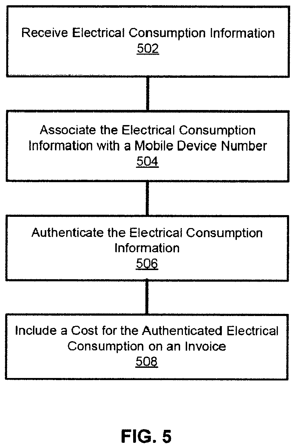

FIG. 5 is a flowchart illustrating a method of practicing an embodiment of the present invention. At step 502, electrical consumption information is received. In one aspect, the electrical consumption information is related to charging an electric vehicle at a charging station. In one aspect, the electrical consumption information is received from a mobile device. In one aspect, the electrical consumption information is wirelessly transmitted from the charging station to the mobile device. In one aspect, receiving electrical consumption information related to charging the electric vehicle at the charging station comprises receiving one of a text message or an email message that indicates an identifier associated with the charging station. In one aspect, receiving electrical consumption information related to charging the electric vehicle at the charging station comprises receiving consumption information transmitted by the charging station. In one aspect, the consumption information transmitted by the charging station further includes the mobile device number.

At step 504,the electrical consumption information is associated with a mobile device number. In one aspect, associating the electrical consumption information with a mobile device number comprises associating the electrical consumption information with the mobile device number of the mobile device that sent the text message or email message.

At step 506, the electrical consumption information is authenticated. In one aspect, authenticating the electrical consumption information comprises transmitting a text message to a mobile device associated with the mobile device number requesting a response confirming the electrical consumption information related to charging the electric vehicle at the charging station. In one aspect, confirming the electrical consumption information related to charging the electric vehicle at the charging station comprises confirming a person associated with the mobile device as a payor for the electrical consumption information related to charging the electric vehicle at the charging station. In one aspect, a response is received from the mobile device associated with the mobile device number confirming the electrical consumption information related to charging the electric vehicle at the charging station. In one aspect, the response from the mobile device associated with the mobile device number confirming the electrical consumption information related to charging the electric vehicle at the charging station comprises one of a text message or an email message. In one aspect., the text message or email message further comprises a PIN that is used to authenticate the transaction.

At step 508, a cost for the authenticated electrical consumption information can be assimilated onto a periodic invoice. In one aspect, the periodic invoice is an invoice for mobile device usage associated with the mobile device number. In one aspect, the periodic invoice is an aggregation of electrical consumption charges accrued over a period of time such as for example a month. The invoice is then transmitted to the user associated with the mobile device. In one aspect, the invoice is transmitted electronically. In one aspect, the invoice is transmitted by mail.

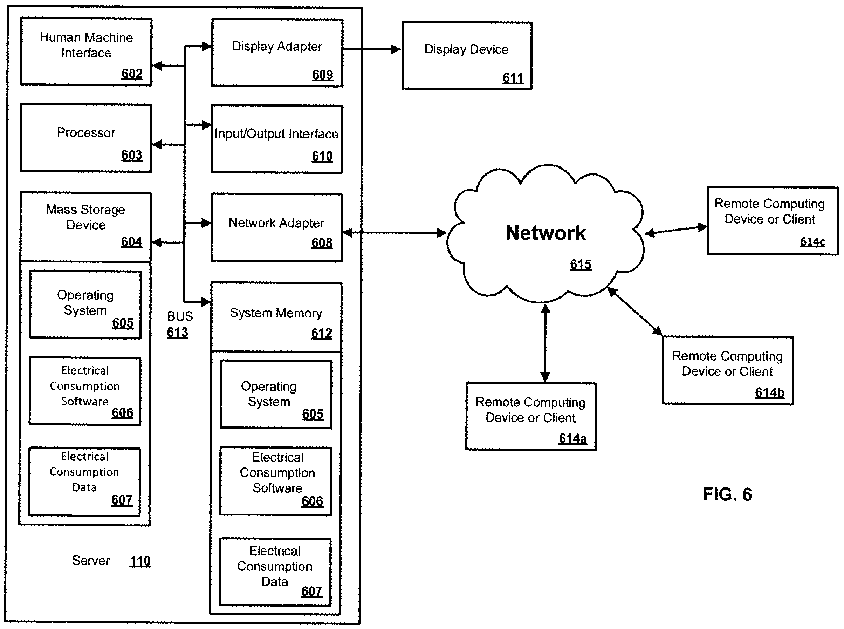

The above system has been described above as comprised of units (e.g., the charging station 104, the mobile device 106, the wireless telecommunications network 108, the server 110, etc.) One skilled in the art will appreciate that this is a functional description and that software, hardware, or a combination of software and hardware can perform the respective functions. A unit, such as the charging station 104, the mobile device 106, the wireless telecommunications network 108, the server 110, can be software, hardware, or a combination of software and hardware. The units can comprise the electrical consumption software 606 as illustrated in FIG. 6 and described below. Reference is now made to FIG. 6, which illustrates one type of electronic device that would benefit from embodiments of the present invention. As shown, the electronic device may be a computing device, and, in particular, a server 110.

FIG. 6 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise machine monitoring systems, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a server 110. The components of the server 110 can comprise, but are not limited to, one or more processors or processing units 603, a system memory 612, and a system bus 613 that couples various system components including the processor 603 to the system memory 612. In the case of multiple processing units 603, the system can utilize parallel computing.

The system bus 613 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 613, and all buses specified in this description can also be implemented over a wired or wireless network connection and each of the subsystems, including the processor 603, a mass storage device 604, an operating system 605, electrical consumption software 606, electrical consumption data 607, a network adapter 608, system memory 612, an Input/Output Interface 610, a display adapter 609, a display device 611, and a human machine interface 602, can be contained within one or more remote computing devices or clients 614a,b,c at physically separate locations, connected through buses of this form, in effect implementing a fully distributed system or distributed architecture.

The server 110 typically comprises a variety of computer readable media. Exemplary readable media can be any available media that is non-transitory and accessible by the server 110 and comprises, for example and not meant to be limiting, both volatile and non-volatile media, removable and non-removable media. The system memory 612 comprises computer readable media in the form of volatile memory, such as random access memory (RAM), and/or non-volatile memory, such as read only memory (ROM). The system memory 612 typically contains data such as electrical consumption data 607 and/or program modules such as operating system 605 and electrical consumption software 606 that are immediately accessible to and/or are presently operated on by the processing unit 603.

In another aspect, the server 110 can also comprise other non-transitory, removable/non-removable, volatile/non-volatile computer storage media. By way of example, FIG. 6 illustrates a mass storage device 604 that can provide non-volatile storage of computer code, computer readable instructions, data structures, program modules, and other data for the server 110. For example and not meant to be limiting, a mass storage device 604 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 604, including by way of example, an operating system 605 and electrical consumption software 606. Each of the operating system 605 and electrical consumption software 606 (or some combination thereof) can comprise elements of the programming and the electrical consumption software 606. Electrical consumption data 607 can also be stored on the mass storage device 604. Electrical consumption data 607 can be stored in any of one or more databases known in the art. Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the server 110 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 603 via a human machine interface 602 that is coupled to the system bus 613, but can be connected by other interface and bus structures, such as a parallel port, game port, an IEEE 1394 Port (also known as a Firewire port), a serial port, or a universal serial bus (USB).

In yet another aspect, a display device 611 can also be connected to the system bus 613 via an interface, such as a display adapter 609. It is contemplated that the server 110 can have more than one display adapter 609 and the server 110 can have more than one display device 611. For example, a display device can be a monitor, an LCD (Liquid Crystal Display), or a projector. In addition to the display device 611, other output peripheral devices can comprise components such as speakers (not shown) and a printer (not shown), which can be connected to the server 110 via Input/Output Interface 610. Any step and/or result of the methods can be output in any form to an output device. Such output can be any form of visual representation, including, but not limited to, textual, graphical, animation, audio, tactile, and the like.

The server 110 can operate in a networked environment using logical connections to one or more remote computing devices or clients 614a,b,c. By way of example, a remote computing device 614 can be a personal computer, portable computer, a server, a router, a network computer, a vendor or manufacture's computing device, peer device or other common network node, and so on. Logical connections between the server 110 and a remote computing device or client 614a,b,c can be made via a local area network (LAN) and a general wide area network (WAN). Such network connections can be through a network adapter 608. A network adapter 608 can be implemented in both wired and wireless environments. Such networking environments are conventional and commonplace in offices, enterprise-wide computer networks, intranets, and other networks 615 such as the Internet.

For purposes of illustration, application programs and other executable program components such as the operating system 605 are illustrated herein as discrete blocks, although it is recognized that such programs and components reside at various times in different storage components of the computing device 110, and are executed by the data processor(s) of the server. An implementation of electrical consumption software 606 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 603 discussed above with reference to FIG. 6, to produce a machine, such that the instructions which execute on the computer or other programmable data processing apparatus create a means for implementing the functions specified in the flowchart block or blocks.

These computer program instructions may also be stored in a non-transitory computer-readable memory that can direct a computer or other programmable data processing apparatus (e.g., one or more processors 603 of FIG. 6) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciate8d that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Various aspects and embodiments of the present invention are defined by the following numbered clauses:
1. A method of payment for charges associated with charging an electric vehicle comprising: receiving electrical consumption information related to charging an electric vehicle at a charging station; associating the electrical consumption information with a mobile device number;
   authenticating the electrical consumption information; and
   including a cost for the authenticated electrical consumption information on an invoice for mobile device usage associated with the mobile device number.
2. The method of Clause 1, wherein receiving electrical consumption information related to charging the electric vehicle at the charging station comprises receiving the electrical consumption information from a mobile device associated with the mobile device number.
3. The method of Clause 1 or Clause 2, wherein receiving electrical consumption information related to charging the electric vehicle at the charging station comprises receiving one of a text message or an email message that indicates an identifier associated with the charging station.
4. The method of any preceding Clause, wherein associating the electrical consumption information with a mobile device number comprises associating the electrical consumption information with the mobile device number of the mobile device that sent the text message or email message.
5. The method of any preceding Clause, wherein the electrical consumption information is wirelessly transmitted from the charging station to the mobile device associated with the mobile device number.
6. The method of any preceding Clause, wherein receiving electrical consumption information related to charging the electric vehicle at the charging station comprises receiving consumption information transmitted by the charging station.
7. The method of any preceding Clause, wherein the consumption information transmitted by the charging station further includes the mobile device number.
8. The method of any preceding Clause, wherein authenticating the electrical consumption information comprises transmitting a text message to a mobile device associated with the mobile device number requesting a response confirming a person associated with the mobile device as a payor for the electrical consumption information related to charging the electric vehicle at the charging station.
9. The method of any preceding Clause, further comprising receiving the response from the mobile device associated with the mobile device number confirming the person associated with the mobile device as the payor for the electrical consumption information related to charging the electric vehicle at the charging station.
10. The method of any preceding Clause, wherein the response from the mobile device associated with the mobile device number confirming the person associated with the mobile device as the payor for the electrical consumption information related to charging the electric vehicle at the charging station comprises one of a text message or an email message.
11. The method of any preceding Clause, wherein the one of a text message or an email message comprises a PIN.
12. The method of any preceding Clause, wherein including a cost for the authenticated electrical consumption information on an invoice for mobile device usage associated with the mobile device number comprises including the cost on a periodic invoice.
13. The method of any preceding Clause, wherein the periodic invoice is an aggregation of electrical consumption charges accrued over a period of time.
14. The method of any preceding Clause, wherein the periodic invoice is electronically transmitted to a person associated with the mobile device number.
15. A method of payment for charges associated with charging an electric vehicle comprising:
   receiving electrical consumption information from a mobile device related to charging an electric vehicle at a charging station;
   associating the electrical consumption information with a mobile device number associated with the mobile device;
   transmitting a message requesting authentication of a person associated with the mobile device as a payor for the electrical consumption information to the mobile device;
   receiving a response from the mobile device associated with the mobile device number confirming the person associated with the mobile device as the payor for electrical consumption information related to charging the electric vehicle at the charging station;
   including a cost for the authenticated electrical consumption information on a periodic invoice for mobile device usage associated with the mobile device number; and
   transmitting the periodic invoice to the person associated with the mobile device.
16. A system for payment for charges associated with charging an electric vehicle comprised of:
   a memory; and
   a processor operably connected with the memory, wherein the processor is configured to: receive electrical consumption information related to charging an electric vehicle at a charging station; associate the electrical consumption information with a mobile device number; authenticate the electrical consumption information; and including a cost for the authenticated electrical consumption information on an invoice for mobile device usage associated with the mobile device number.
17. The system of Clause 16, wherein the electrical consumption information is received from a mobile device associated with the mobile device number.
18. The system of Clause 16 or Clause 17, wherein the electrical consumption information is received via one of a text message or an email message that indicates an identifier associated with the charging station.
19. The system of any of Clauses 16 to 18, wherein the electrical consumption information is associated with the mobile device number of the mobile device that sent the text message or email message.
20. The system of any of Clauses 16 to 19, wherein the electrical consumption information is wirelessly transmitted from the charging station to the mobile device associated with the mobile device number.
21. The system of any of Clauses 16 to 20, wherein the electrical consumption information related to charging the electric vehicle at the charging station is transmitted by the charging station.
22. The system of any of Clauses 16 to 21, wherein the consumption information transmitted by the charging station further includes the mobile device number.

## Claims

1. A method of payment for charges associated with charging an electric vehicle comprising:
receiving electrical consumption information related to charging an electric vehicle (102) at a charging station (104);
associating the electrical consumption information with a mobile device number;
authenticating the electrical consumption information; and
including a cost for the authenticated electrical consumption information on an invoice (114) for mobile device usage associated with the mobile device number.

2. The method of Claim 1, wherein receiving electrical consumption information related to charging the electric vehicle (102) at the charging station (104) comprises receiving the electrical consumption information from a mobile device (106) associated with the mobile device number.

3. The method of any of Claims 1 through 2, wherein receiving electrical consumption information related to charging the electric vehicle (102) at the charging station (104) comprises receiving consumption information transmitted by the charging station (104).

4. The method of any of Claims 1 through 3, wherein authenticating the electrical consumption information comprises transmitting a text message to a mobile device (106) associated with the mobile device number requesting a response confirming a person (116) associated with the mobile device (106) as a payor for the electrical consumption information related to charging the electric vehicle (102) at the charging station (104).

5. The method of any preceding Claim, further comprising receiving the response from the mobile device (106) associated with the mobile device number confirming the person (116) associated with the mobile device (106) as the payor for the electrical consumption information related to charging the electric vehicle (102) at the charging station (104).

6. A system for payment for charges associated with charging an electric vehicle comprised of:
a memory (612); and
a processor (603) operably connected with the memory (612), wherein the processor (603) is configured to:
receive electrical consumption information related to charging an electric vehicle (102) at a charging station (104);
associate the electrical consumption information with a mobile device number;
authenticate the electrical consumption information; and
including a cost for the authenticated electrical consumption information on an invoice (114) for mobile device usage associated with the mobile device number.

7. The system of Claim 6, wherein the electrical consumption information is received from a mobile device (106) associated with the mobile device number and the electrical consumption information is received via one of a text message or an email message that indicates an identifier associated with the charging station (104).

8. The system of Claim 6 or Claim 7, wherein the electrical consumption information is wirelessly transmitted from the charging station (104) to the mobile device (106) associated with the mobile device number.

9. The system of any of Claims 6 through 8, wherein the electrical consumption information related to charging the electric vehicle (102) at the charging station (104) is transmitted by the charging station (104).

10. The system of any of Claims 6 to 9, wherein the consumption information transmitted by the charging station (104) further includes the mobile device number.
